# EUROPÄISCHE PATENTSCHRIFT

(11) **EP 2 888 721 B1**
(45) Veröffentlichungstag und Bekanntmachung des Hinweises auf die Patenterteilung: **30.05.2018**
(21) Anmeldenummer: 13741704.4
(22) Anmeldetag: 18.07.2013
(51) Int. Cl.: G07C 5/00, G08G 1/01, G08G 1/16, G08G 1/0967, G08G 1/0962, G01C 21/36

(54) **VERFAHREN UND VORRICHTUNG ZUM ERMITTELN EINER GEFAHRENQUELLE EINER FAHRSTRECKE**
METHOD AND DEVICE FOR DETERMINING A SOURCE OF DANGER ON A TRAVEL ROUTE
PROCÉDÉ ET DISPOSITIF DE DÉTERMINATION D'UNE SOURCE DE DANGER SUR UN PARCOURS

(30) Priorität: 24.08.2012 DE 102012215064
(43) Veröffentlichungstag der Anmeldung: 01.07.2015
(73) Patentinhaber: Robert Bosch GmbH, 70442 Stuttgart (DE)
(72) Erfinder: BRAEUCHLE, Christian, 74855 Hassmersheim - Hochhausen (DE); KNOOP, Michael, 71638 Ludwigsburg (DE); FLEHMIG, Folko, 70192 Stuttgart (DE)
(86) Internationale Anmeldenummer: PCT/EP2013/065212
(87) Internationale Veröffentlichungsnummer: WO 2014/029569

(56) Entgegenhaltungen:
- EP-A1- 2 169 635
- DE-A1-102008 012 661
- DE-A1-102009 018 742
- DE-A1-102010 055 370
- US-A1- 2012 191 291

## Beschreibung

Die Erfindung betrifft ein Verfahren und eine Vorrichtung zum Ermitteln einer Gefahrenquelle einer Fahrstrecke. Die Erfindung betrifft ferner ein Computerprogramm.

### Stand der Technik

Es sind digitale Karten bekannt, auf denen Navigationsinformationen und Hinweise als sogenannte "Points of Interest", also Orte von Interesse, wie beispielsweise Tankstellen, Restaurants oder Vergnügungsparks gespeichert sind.

Es ist wünschenswert, auch Gefahrenquellen einer Fahrstrecke auf solchen digitalen Karten darstellen zu können. Hierfür müssen solche Gefahrenquellen jedoch zuvor ermittelt werden.

Die Offenlegungsschrift DE 10 2008 012661 A1 zeigt eine Aktualisierungseinheit und ein Verfahren zur Aktualisierung einer digitalen Karte.

Die Offenlegungsschrift EP 2 169 635 A1 zeigt einen Datenschreiber, ein Fahrerassistenzsystem und ein Verfahren zur Identifikation von kritischen Fahrsituationen.

Die Offenlegungsschrift US 2012/191291 A1 zeigt ein Verfahren zur Steuerung von miteinander vernetzten Einrichtungen zur Verwendung mit einem Fahrzeug.

Die Offenlegungsschrift DE 10 2010 055370 A1 zeigt ein Verfahren zum Erstellen und zur Nutzung einer Gefahrenkarte eines Kraftfahrzeug-Navigationssystems.

### Offenbarung der Erfindung

Die der Erfindung zugrunde liegende Aufgabe kann daher darin gesehen werden, ein Verfahren zum Ermitteln einer Gefahrenquelle einer Fahrstrecke bereitzustellen.

Die der Erfindung zugrunde liegende Aufgabe kann auch darin gesehen werden, eine Vorrichtung zum Ermitteln einer Gefahrenquelle einer Fahrstrecke anzugeben.

Die der Erfindung zugrunde liegende Aufgabe kann ferner darin gesehen werden, ein entsprechendes Computerprogramm bereitzustellen.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Verfahren zum Ermitteln einer Gefahrenquelle einer Fahrstrecke bereitgestellt. Während einer Fahrt eines Fahrzeugs entlang der Fahrstrecke wird ein Fahrzeugparameter gemessen. Der gemessene Fahrzeugparameter wird mit einem Fahrzeugparameterschwellwert verglichen. Abhängig von dem Vergleich werden Gefahrendaten gebildet. Die Gefahrendaten umfassen den gemessenen Fahrzeugparameter und einen der Messung zugeordneten Fahrzeugort. Die Gefahrendaten umfassen also insbesondere eine Information darüber, dass an dem der Messung zugeordneten Fahrzeugort eine Gefahrenquelle gebildet ist.

Gemäß einem weiteren Aspekt wird eine Vorrichtung zum Ermitteln einer Gefahrenquelle einer Fahrstrecke bereitgestellt. Die Vorrichtung umfasst eine Messeinrichtung zum Messen eines Fahrzeugparameters. Des Weiteren umfasst die Vorrichtung eine Ortsbestimmungseinrichtung zum Bestimmen eines Fahrzeugorts. Darüber hinaus ist eine Datenverarbeitungseinrichtung zum Vergleichen des gemessenen Fahrzeugparameters mit einem Fahrzeugparameterschwellwert und zum Bilden von Gefahrendaten vorgesehen, wobei die Gefahrendaten den gemessenen Fahrzeugparameter und einen der Messung zugeordneten Fahrzeugort umfassen. Die Gefahrendaten umfassen also insbesondere eine Information darüber, dass an dem der Messung zugeordneten Fahrzeugort eine Gefahrenquelle gebildet ist.

Gemäß einem weiteren Aspekt wird ein Computerprogramm bereitgestellt, das Programmcode zur Ausführung des Verfahrens zum Ermitteln einer Gefahrenquelle einer Fahrstrecke umfasst, wenn das Computerprogramm in einem Computer ausgeführt wird.

Nach noch einem Aspekt wird ein Fahrzeug bereitgestellt, das die Vorrichtung zum Ermitteln einer Gefahrenquelle einer Fahrstrecke umfasst.

Dadurch, dass während der Fahrt des Fahrzeugs entlang der Fahrstrecke sowohl ein Fahrzeugparameter als auch ein Fahrzeugort erfasst werden, ist in vorteilhafter Weise eine besonders einfache Ermittlung einer Gefahrenquelle der Fahrstrecke ermöglicht, weil der Vergleich des gemessenen Fahrzeugparameters mit dem Fahrzeugparameterschwellwert dafür verwendet wird, um zu definieren, dass an dem der Messung zugeordneten Fahrzeugort eine Gefahrenquelle gebildet ist. Verwendet bedeutet hier, dass der Vergleich ein vorbestimmtes Ergebnis aufweisen muss, um zu definieren, dass an dem der Messung zugeordneten Fahrzeugort eine Gefahrenquelle gebildet ist.

Der Vergleich zwischen dem gemessenen Fahrzeugparameter und dem Fahrzeugparameterschwellwert umfasst insbesondere eine Prüfung dahingehend, ob der gemessene Fahrzeugparameter kleiner, größer, gleich, kleiner gleich oder größer gleich als der Fahrzeugparameterschwellwert ist. Das heißt also insbesondere, dass die Gefahrendaten nur dann gebildet werden, wenn der gemessene Fahrzeugparameter kleiner, größer, gleich, kleiner gleich oder größer gleich als der Fahrzeugparameterschwellwert ist.

Eine Gefahrenquelle im Sinne der vorliegenden Erfindung stellt insbesondere eine Gefahr für das Fahrzeug bereit. Eine Gefahr bezeichnet hier insbesondere ein Sachverhalt und/oder eine Situation, in der es zu einer negativen Auswirkung für das Fahrzeug kommen kann. Eine negative Auswirkung kann beispielsweise ein Unfall und/oder ein Fahrzeugschaden und/oder ein Personenschaden und/oder ein unkontrollierbares oder schlecht kontrollierbares Fahrzeugverhalten sein.

So kann eine Gefahrenquelle beispielsweise eine besonders enge Kurve sein, in der es zum einem Schleudern des Fahrzeugs kommen kann. Beispielsweise kann eine Gefahrenquelle ein Fahrbahnschaden sein, beispielsweise Spurrillen und/oder Schlaglöcher.

Dadurch, dass Gefahrendaten nur dann gebildet werden, wenn der Vergleich ein bestimmtes Ergebnis hat, können unkritische Fahrzeugmanöver, wie beispielsweise Parkier- und Manövriervorgänge, erkannt werden. Der Vergleich wirkt hier in vorteilhafter Weise als eine Plausibilitätsprüfung, um diese unkritischen Manöver von einer weiteren Auswertung auszuschließen.

Gemäß einer Ausführungsform werden mehrere Fahrzeugparameter gemessen. Hierbei können die Fahrzeugparameter insbesondere gleich oder beispielsweise unterschiedlich gebildet sein. Es findet dann vorzugsweise ein Vergleich mit einem jeweiligen Fahrzeugparameterschwellwert statt. Abhängig von den Vergleichen werden dann entsprechende Gefahrendaten gebildet.

Ein der Messung zugeordneter Fahrzeugort im Sinne der vorliegenden Erfindung bedeutet insbesondere, dass ein Fahrzeugort gemessen und dem gemessenen Fahrzeugparameter zugeordnet wird. Es findet also insofern eine Verknüpfung bzw. eine Zuordnung zwischen dem gemessenen Fahrzeugparameter einerseits und dem Fahrzeugort andererseits statt. Im einfachsten Fall wird mittels der Messung des Fahrzeugorts die Information gebildet, dass sich das Fahrzeug entlang der Fahrstrecke befindet. Das heißt also insbesondere, dass in diesem Fall die Gefahrendaten die Information umfassen, dass entlang der Fahrstrecke eine Gefahrenquelle gebildet ist.

Gemäß einer Ausführungsform kann vorgesehen sein, dass zum Zeitpunkt der Messung des Fahrzeugparameters der Fahrzeugort gemessen wird. Somit ist eine besonders genaue Zuordnung bezüglich des Ortes der Gefahrenquelle für den Fahrzeugparameter ermöglicht. Die Gefahrendaten umfassen also dann eine besonders genaue Information darüber, wo genau entlang der Fahrstrecke die Gefahrenquelle gebildet ist.

Gemäß einer Ausführungsform kann vorgesehen sein, dass zum Zeitpunkt des Vergleichs der Fahrzeugort gemessen wird. Insbesondere kann vorgesehen sein, dass der Fahrzeugort in Abhängigkeit von dem Vergleich gemessen wird. Insbesondere kann vorgesehen sein, dass der Fahrzeugort gemessen wird, wenn aufgrund des Vergleichs Gefahrendaten gebildet werden sollen. Insbesondere im letzteren Fall wird somit nur dann ein Fahrzeugort gemessen, wenn dies erforderlich ist. Somit werden vorhandene Rechenressourcen besonders effizient verwendet.

Nach einer Ausführungsform kann vorgesehen sein, dass ein Fahrzeugort kontinuierlich gemessen wird.

Gemäß einer weiteren Ausführungsform kann vorgesehen sein, dass Fahrzeugparameter kontinuierlich während der Fahrt des Fahrzeugs entlang der Fahrstrecke gemessen werden.

In einer anderen Ausführungsform kann vorgesehen sein, dass der Fahrzeugort zeitversetzt zu dem Zeitpunkt der Messung des Fahrzeugparameters oder zeitversetzt zum Zeitpunkt des Vergleichs gemessen wird. Hierbei hängt es insbesondere von einer Fahrzeuggeschwindigkeit ab, wie viel Distanz das Fahrzeug zwischen der Messung des Fahrzeugparameters und der Messung des Fahrzeugorts bereits überbrückt hat. Je kürzer der zeitliche Abstand zwischen der Messung des Fahrzeugparameters bzw. dem Vergleich und der Messung des Fahrzeugorts ist, desto genauer ist in der Regel die Information darüber, wo genau sich die Gefahrenquelle entlang der Fahrstrecke befindet.

Nach einer Ausführungsform kann vorgesehen sein, dass der Fahrzeugort mittels eines Navigationssystems gemessen wird.

In einer Ausführungsform kann vorgesehen sein, dass der Fahrzeugparameter ein Parameter ausgewählt aus der folgenden Gruppe von Parametern ist: Betriebszustand eines Fahrerassistenzsystems des Fahrzeugs, Fahrzeugbewegungsgröße, Lenkradwinkelgeschwindigkeit oder Sensorwert eines Sensors.

Vorzugsweise handelt es sich bei der Fahrzeugbewegungsgröße um eine Längsbeschleunigung, Querbeschleunigung, Vertikalbeschleunigung, Gierrate, Gierbeschleunigung oder eine Fahrzeuggeschwindigkeit. Bei dem Sensor kann es sich beispielsweise um einen Kollisionssensor zum Erkennen einer Kollision handeln. Insbesondere kann es sich bei dem Sensor um einen Sensor einer Airbag-Sensorik handeln.

Bei dem Fahrerassistenzsystem kann es sich beispielsweise um eine automatische Geschwindigkeitsregelung, ein elektronisches Stabilitätsprogramm-System, ein Anti-Blockier-System (ABS), ein Antriebsschlupfregelungssystem (ASR), ein Spurhaltungssystem, ein Notbremsungssystem oder ein Spurhaltungswarnungssystem handeln. Wenn mehrere Fahrzeugparameter gemessen werden, kann insbesondere vorgesehen sein, dass Fahrzeugparameter von verschiedenen Fahrerassistenzsystemen gemessen werden.

In der Ausführungsform, in der mehrere Fahrzeugparameter gemessen werden, kann beispielsweise vorgesehen sein, dass Betriebszustände von Fahrerassistenzsystemen als auch Fahrzeugbewegungsgrößen gemessen werden.

Ein Betriebszustand im Sinne der vorliegenden Erfindung kann beispielsweise ein aktiver Betriebszustand sein. Ein aktiver Betriebszustand eines Fahrerassistenzsystems bezeichnet insbesondere einen Betriebszustand, in welchem das Fahrerassistenzsystem automatisch einen Eingriff in eine Fahrzeugführung durchführt. Das heißt also beispielsweise im Fall eines Notbremsungssystems, dass das Fahrzeug automatisch eine Notbremsung durchführt. Bei einem Spurhaltungssystem kann beispielsweise vorgesehen sein, dass ein aktiver Betriebszustand ein Betriebszustand ist, in welchem das System das Fahrzeug automatisch in einer Fahrspur hält. Bei einem automatischen Geschwindigkeitsregelungssystem kann ein solcher aktiver Betriebszustand ein Betriebszustand sein, in welchem das System das Fahrzeug automatisch auf einer vorbestimmten Geschwindigkeit hält.

Ein Betriebszustand im Sinne der vorliegenden Erfindung kann insbesondere ein passiver Betriebszustand sein, in welchem das Fahrerassistenzsystem keinen Eingriff in eine Fahrzeugführung durchführt.

Das heißt also insbesondere, dass aufgrund des Vergleichs festgestellt wird, ob das Fahrerassistenzsystem einen Eingriff in eine Fahrzeugführung durchführt bzw. durchgeführt hat. Wenn dies der Fall ist, so werden vorzugsweise entsprechende Gefahrendaten gebildet. Solche Gefahrendaten umfassen dann insbesondere die Information darüber, dass ein Fahrerassistenzsystem des Fahrzeugs einen Eingriff in die Fahrzeugführung durchgeführt hat. Die Gefahrendaten umfassen insbesondere die Information darüber, welches Fahrerassistenzsystem welchen Eingriff durchgeführt hat. Aufgrund der Messung des Orts des Fahrzeugs ist dann in vorteilhafter Weise insbesondere die Information darüber gebildet, wo entlang der Fahrstrecke das Fahrerassistenzsystem den Eingriff durchgeführt hat.

Nach einer Ausführungsform kann vorgesehen sein, dass ein Umweltparameter ausgewählt aus der folgenden Gruppe von Parametern gemessen wird: Umgebungstemperatur des Fahrzeugs, Uhrzeit, Wetter, Scheibenwischerbetriebszustand, Umgebungshelligkeit, Umgebungsluftdruck oder Umgebungsfeuchtigkeit.

Der gemessene Umweltparameter wird vorzugsweise den Gefahrendaten für eine Information darüber zugeordnet, welche Umweltbedingungen zum Zeitpunkt der Messung des Fahrzeugparameters vorlagen.

Nach einer Ausführungsform kann vorgesehen sein, dass mehrere Umweltparameter gemessen werden. Die mehreren Umweltparameter können beispielsweise gleich oder vorzugsweise unterschiedlich gebildet sein.

Bei einem Scheibenwischerbetriebszustand kann es sich beispielsweise um einen aktiven Betriebszustand handeln, in welchem der Scheibenwischer aktiviert ist und insofern eine Fahrzeugscheibe von Wasser bzw. Feuchtigkeit befreit, also hin und her wischt. Es kann sich beispielsweise bei dem Scheibenwischerbetriebszustand um einen passiven Betriebszustand handeln, in welchem der Scheibenwischer nicht aktiv ist, also nicht hin und her wischt. Ein aktiver Scheibenwischer ist insbesondere ein Hinweis dafür, dass zum Zeitpunkt der Messung des Fahrzeugparameters Regen oder erhöhte Luftfeuchtigkeit vorlagen.

Durch die Messung von Umweltparametern werden also insbesondere die zum Zeitpunkt der Messung des Fahrzeugparameters vorherrschenden Umweltbedingungen erfasst. Es wird also in vorteilhafter Weise zusätzlich ausgewertet, ob spezielle Randbedingungen wie beispielsweise winterliche Straßenverhältnisse vorlagen.

Somit kann beispielsweise die Aussage darüber getroffen werden, ob es sich bei der Gefahrenquelle um eine temporäre Gefahrenquelle handelt oder um eine dauerhafte Gefahrenquelle. Beispielsweise kann ein Eingriff eines Fahrerassistenzsystems notwendig gewesen sein, da glatte bzw. rutschige Straßenverhältnisse vorlagen. Ein solcher Eingriff wäre aber bei trockenen Verhältnissen nicht notwendig gewesen. Die Gefahrenquelle ist hier insbesondere nur temporär gebildet, solange die nassen Witterungsbedingungen andauern. Eine besonders genaue Ermittlung und Bestimmung und Charakterisierung der Gefahrenquelle ist somit in vorteilhafter Weise ermöglicht.

Nach einer Ausführungsform kann vorgesehen sein, dass die Gefahrendaten an einen Cloudserver für eine weitere Verarbeitung gesendet werden. Ein Cloudserver bezeichnet insbesondere einen Server, welcher extern von dem Fahrzeug angeordnet ist. Eine Kommunikation zwischen dem Fahrzeug und dem Cloudserver kann beispielsweise mittels eines drahtlosen Kommunikationsverfahrens, insbesondere eines Mobilfunkkommunikationsverfahrens, durchgeführt werden.

Ein Cloudserver im Sinne der vorliegenden Erfindung bezeichnet insbesondere einen Computer bzw. einen Rechner oder Server oder einen Computerverbund bzw. einen Rechnerverbund oder einen Serververbund, welcher außerhalb des Fahrzeugs bzw. extern von dem Fahrzeug oder, wenn mehrere Fahrzeuge vorgesehen sind, außerhalb der mehreren Fahrzeuge bzw. extern von den mehreren Fahrzeugen angeordnet ist.

Gemäß einer Ausführungsform kann vorgesehen sein, dass mehrere Fahrzeuge entlang der Fahrstrecke fahren und entsprechend die Verfahrensschritte zum Ermitteln einer Gefahrenquelle einer Fahrstrecke durchführen. Es werden also in dieser Ausführungsform von mehreren Fahrzeugen entsprechende Gefahrendaten an den Cloudserver gesendet. Dieser kann also in vorteilhafter Weise auf eine Vielzahl von Gefahrendaten zurückgreifen, um diese auszuwerten, insbesondere statistisch auszuwerten. Die Gefahrendaten der mehreren Fahrzeuge werden insbesondere aggregiert. Somit kann also vorzugsweise statistisch überprüft werden, ob an den gemessenen Fahrzeugorten, die den Fahrzeugparametern zugeordnet wurden, entsprechende Gefahrenquellen gebildet sind, oder ob es sich beispielsweise um Fehlmessungen handelt.

Gemäß einer Ausführungsform kann vorgesehen sein, dass die Gefahrendaten nach Ende der Fahrt an den Cloudserver gesendet werden, also insbesondere dann, wenn das Fahrzeug abgestellt und ein Antriebsmotor deaktiviert werden.

Der Cloudserver kann also in vorteilhafter Weise als eine zentrale Instanz die empfangenen Gefahrendaten auswerten und entsprechend ein spezifisches die Gefahrenquelle näher charakterisierendes Gefahrenmerkmal an den entsprechenden Fahrzeugorten setzen, insbesondere auf einer digitalen Karten setzen, da er mittels der Gefahrendaten darüber Bescheid weiß, dass an diesem Ort eine Gefahrenquelle gebildet ist. Er setzt dieses spezifische Gefahrenmerkmal insbesondere nur dann für einen Ort entlang der Fahrstrecke, wenn an dem Ort ein bestimmter Fahrzeugparameter besonders häufig von den Gefahrendaten umfasst war. Zusätzlich kann der Cloudserver noch gemessene Umweltparameter auswerten, um beispielsweise festzustellen, ob die Gefahrenquelle nur bei bestimmten Witterungsbedingungen auftritt.

Der Cloudserver wertet also die Gefahrendaten insbesondere dahingehend aus, an welchen Orten entlang der Fahrstrecke welche Eingriffe von welchen Fahrerassistenzsystemen durchgeführt wurden, insbesondere wie häufig durchgeführt wurden. Insbesondere findet eine Auswertung der Gefahrendaten seitens des Cloudservers dahingehend statt, welche Fahrzeugparameter an welchen Orten entlang der Fahrstrecke von den Gefahrendaten umfasst sind, insbesondere wie häufig ein bestimmter Typ eines Fahrzeugparametern an einem bestimmten Ort gemessen wurde, der (also der Fahrzeugparameter) dazu führte, dass Gefahrendaten gebildet wurden.

Vorzugsweise wertet der Cloudserver die Gefahrendaten der einzelnen Fahrzeuge zunächst einzeln dahingehend aus, wo welche Gefahrenquelle gebildet ist. Anschließend werden nur die Orte markiert, also mit einem Gefahrenmerkmal versehen, an denen basierend auf den einzelnen Auswertungen besonders häufig eine Gefahrenquelle gebildet ist, also häufiger bzw. öfter als ein vorbestimmter Häufigkeitswert.

Gemäß einer Ausführungsform kann vorgesehen sein, dass, wenn der Fahrzeugparameter eine Fahrzeugquerbeschleunigung, Gierrate oder Gierbeschleunigung ist, eine mittels der Gefahrenquelle bereitgestellte potentielle Gefahr als eine Schleudergefahr klassifiziert wird. Das heißt also insbesondere, dass wenn die Fahrzeugquerbeschleunigung, die Gierrate oder die Gierbeschleunigung größer oder größer gleich als ein Fahrzeugquerbeschleunigungsschwellwert, ein Gierrateschwellwert oder ein Gierbeschleunigungsschwellwert ist, die potentielle Gefahr als eine Schleudergefahr klassifiziert wird.

In einer Ausführungsform kann vorgesehen sein, dass, wenn der Betriebszustand eines Fahrdynamikregelungssystems ein aktiver Betriebszustand ist, in welchem das Fahrdynamikregelungssystem einen Eingriff in eine Fahrzeugführung durchführt, die mittels der Gefahrenquelle bereitgestellte potentielle Gefahr als eine Schleudergefahr klassifiziert wird.

Gemäß einer Ausführungsform kann vorgesehen sein, dass, wenn der Fahrzeugparameter ein Betriebszustand eines Spurhaltungssystems ist, die Gefahrenquelle als eine Kurve klassifiziert wird. Das heißt also insbesondere, dass, wenn der Betriebszustand des Spurhaltungssystems ein aktiver Betriebszustand ist, in welchem das Spurhaltungssystem einen Eingriff in eine Fahrzeugführung dahingehend durchführt, dass das Fahrzeug innerhalb einer Fahrspur gehalten wird, die Gefahrendaten dann insbesondere die Informationen umfassen, dass an dem gemessenen Fahrzeugort eine Kurve, insbesondere eine gefährliche Kurve, vorhanden ist.

Gemäß einer Ausführungsform kann vorgesehen sein, dass ein Kurvenradius übermittelt wird. Ein solcher Kurvenradius kann insbesondere aus dem Lenkradwinkel und/oder einer Querbeschleunigung a_{quer} und einer Fahrzeuggeschwindigkeit v gemäß r_{Kurve} = v²/a_{quer} ermittelt werden. Insbesondere wenn als Fahrzeugparameter ein Betriebszustand eines Spurhaltungssystems gemessen wird, kann im Fall des Bildens der Gefahrendaten vorgesehen sein, dass der Kurvenradius ermittelt und den Gefahrendaten zugeordnet wird. Vorzugsweise kann vorgesehen sein, dass die Parameter zur Ermittlung des Kurvenradius an den Cloudserver gesendet werden, der basierend auf diesen Parametern den Kurvenradius ermittelt.

In einer Ausführungsform kann vorgesehen sein, dass, wenn der Fahrzeugparameter eine Fahrzeuglängsbeschleunigung ist, eine mittels der Gefahrenquelle bereitgestellte potentielle Gefahr als ein potentieller Auffahrunfall klassifiziert wird.

Nach einer Ausführungsform kann vorgesehen sein, dass, wenn der Fahrzeugparameter ein Betriebszustand eines automatischen Notbremssystems ist, die mittels der Gefahrenquelle bereitgestellte potentielle Gefahr als ein potentieller Auffahrunfall klassifiziert wird.

In einer Ausführungsform kann vorgesehen sein, dass, wenn der Fahrzeugparameter ein Betriebszustand eines Antiblockiersystems ist, eine mittels der Gefahrenquelle bereitgestellte potentielle Gefahr als ein potentieller Auffahrunfall klassifiziert wird.

In den vorgenannten Ausführungsformen wird also insbesondere festgestellt, ob das Fahrzeug übermäßig stark abgebremst wurde. Das heißt also insbesondere, dass in der Regel an dem entsprechenden Fahrzeugort eine erhöhte Gefahr für Auffahrunfälle besteht.

Gemäß einer Ausführungsform kann vorgesehen sein, dass, wenn der Fahrzeugparameter eine Vertikalbeschleunigung ist, die Gefahrenquelle als Fahrbahnschäden, beispielsweise als ein Schlagloch, klassifiziert wird. Das heißt also insbesondere, dass festgestellt wird, ob das Fahrzeug in vertikaler Richtung beschleunigt wurde. Dies kann insbesondere aufgrund eines Schlagloches passieren.

Gemäß einer Ausführungsform kann vorgesehen sein, dass basierend auf den Gefahrendaten ein Warnhinweis bereitgestellt wird. Insbesondere kann vorgesehen sein, dass der Cloudserver einen solchen Warnhinweis bereitstellt und an das Fahrzeug sendet. Vorzugsweise kann vorgesehen sein, dass solche Warnhinweise und insbesondere die ausgewerteten Gefahrendaten auf ein tragbares Speichermedium abspeichert werden, sodass mittels des tragbaren Speichermediums der Nutzer ein entsprechendes Warnsystem oder ein Navigationssystem im Fahrzeug aktualisieren kann.

Das Bereitstellen des Warnhinweises kann insbesondere ein Anzeigen der Gefahrenquelle auf einer digitalen Karte umfassen.

Das Bereitstellen des Warnhinweises kann insbesondere ein Anzeigen eines Gefahrensymbols auf einer digitalen Karte umfassen. Insbesondere kann ein solches Gefahrensymbol auch in einem Kombiinstrument angezeigt werden. Die Gefahrenstelle bzw. Gefahrenquelle kann insbesondere auf einer digitalen Karte in einer Head-Unit angezeigt werden.

Vorzugsweise kann das Gefahrensymbol bzw. die Gefahrenquelle auf der digitalen Karte mittels eines Head-up-Displays in der Windschutzscheibe des Fahrzeugs eingeblendet werden.

Vorzugsweise kann vorgesehen sein, dass eine maximale Geschwindigkeit angezeigt wird, mittels welcher das Durchfahren einer Kurve gefahrlos, also ohne ein Schleudern, möglich ist.

Beispielsweise kann das Bereitstellen eines Warnhinweises ein Beaufschlagen eines Fahrpedals mittels einer Gegenkraft umfassen, sodass der Fahrer eine haptische Rückmeldung, also ein Force-Feedback, über das Fahrpedal bekommt, dass er auf eine Gefahrenquelle zufährt.

Nach einer Ausführungsform kann vorgesehen sein, dass basierend auf den Gefahrendaten ein Fahrerassistenzsystem des Fahrzeugs zum Durchführen einer Aktion in Reaktion auf die Gefahrenquelle betrieben wird.

Das heißt also insbesondere, dass die Fahrerassistenzsysteme, insbesondere Fahrstabilisierungssysteme, in vorteilhafter Weise auf die bevorstehende Gefahr vorbereitet werden können, sodass diese schnell und optimal auf die Gefahr reagieren können.

Beispielsweise kann vorgesehen sein, dass eine Umparametrierung der Parameter der Fahrerassistenzsysteme durchgeführt wird, basierend auf welchen die Fahrerassistenzsysteme betrieben werden. Beispielsweise kann vorgesehen sein, dass Eingriffsschwellen abgesenkt werden, um einen früheren Eingriff in eine Regelung zu ermöglichen.

Beispielsweise kann vorgesehen sein, dass ein Steller vorbereitet wird. Insbesondere kann vorgesehen sein, dass ein Radbremszylinder vorbefüllt wird, um in vorteilhafter Weise eine schnellere Wirkung des Eingriffs mittels des Stellers zu erreichen.

Beispielsweise kann vorgesehen sein, dass ein Zielabstand bzw. Sollabstand eines ACC-Systems erhöht wird, um einen größeren Sicherheitsabstand zum vorausfahrenden Fahrzeug zu gewinnen. Hierbei steht ACC für Adaptive Cruise Control. Ein solches ACC-System ist auch unter dem Begriff Abstandsregeltempomat bekannt und bezeichnet insbesondere eine Geschwindigkeitsregeleinrichtung, die bei einer Regelung einer Fahrzeuggeschwindigkeit zusätzlich einen Abstand zu einem vorausfahrenden Fahrzeug als zusätzliche Rückführstellgröße berücksichtigt.

Vorzugsweise kann vorgesehen sein, dass eine Setzgeschwindigkeit bzw. eine Sollgeschwindigkeit eines Tempomatens, insbesondere eines Abstandsregeltempomatens, abgesenkt wird.

Vorzugsweise kann eine Umparametrierung von Verstelldämpfern vorgesehen sein, um eine Einkopplung von Vertikalstörungen aufgrund von Fahrbahnschäden in einen Fahrzeugaufbau zu verringern.

Die Erfindung wird im Folgenden anhand von bevorzugten Ausführungsbeispielen näher erläutert. Hierbei zeigen
- Fig. 1: ein Ablaufdiagramm eines Verfahrens zum Ermitteln einer Gefahrenquelle einer Fahrstrecke,
- Fig. 2: ein Ablaufdiagramm eines weiteren Verfahrens zum Ermitteln einer Gefahrenquelle einer Fahrstrecke,
- Fig. 3: ein Ablaufdiagramm eines anderen Verfahrens zum Ermitteln einer Gefahrenquelle einer Fahrstrecke und
- Fig. 4: eine Vorrichtung zum Ermitteln einer Gefahrenquelle einer Fahrstrecke.

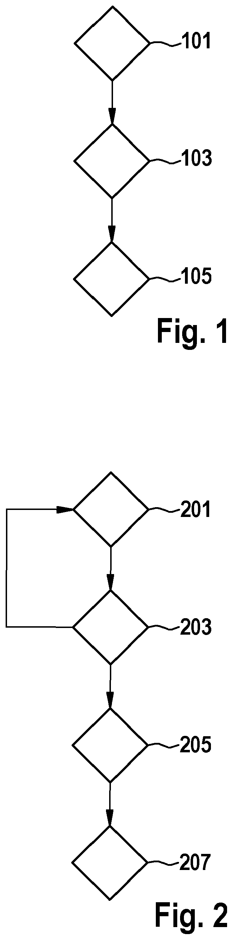

Fig. 1 zeigt ein Ablaufdiagramm eines Verfahrens zum Ermitteln einer Gefahrenquelle einer Fahrstrecke.

Gemäß einem Schritt 101 wird während einer Fahrt eines Fahrzeugs entlang der Fahrstrecke ein Fahrzeugparameter gemessen. Gemäß einem Schritt 103 wird der gemessene Fahrzeugparameter mit einem Fahrzeugparameterschwellwert verglichen. Gemäß einem Schritt 105 werden abhängig von dem Vergleich Gefahrendaten gebildet, die den gemessenen Fahrzeugparameter und einen der Messung zugeordneten Fahrzeugort umfassen. Das heißt also insbesondere, dass die Gefahrendaten eine Information darüber umfassen, dass an dem der Messung zugeordneten Fahrzeugort eine Gefahrenquelle gebildet ist.

Fig. 2 zeigt ein Ablaufdiagramm eines weiteren Verfahrens zum Ermitteln einer Gefahrenquelle einer Fahrstrecke.

Gemäß einem Schritt 201 wird eine Querbeschleunigung des Fahrzeugs während einer Fahrt des Fahrzeugs entlang der Fahrstrecke gemessen.

In einem Schritt 203 wird überprüft, ob die gemessene Querbeschleunigung größer oder gleich als ein Querbeschleunigungsschwellwert ist. Wenn gemäß Schritt 203 festgestellt wird, dass die gemessene Querbeschleunigung kleiner als der Querbeschleunigungsschwellwert ist, so wird das Verfahren beendet und kann beispielsweise im Schritt 201 neu gestartet werden.

Wenn im Schritt 203 festgestellt wird, dass die gemessene Querbeschleunigung größer gleich dem Querbeschleunigungsschwellwert ist, so werden in einem Schritt 205 Gefahrendaten umfassend die gemessene Querbeschleunigung und einen der Messung zugeordneten Fahrzeugort für eine Information darüber gebildet, dass an dem der Messung zugeordneten Fahrzeugort eine Gefahrenquelle gebildet ist.

Da es sich bei dem gemessenen Fahrzeugparameter um die Querbeschleunigung, die Gierrate oder die Gierbeschleunigung handelt, kann vorzugsweise eine mittels der Gefahrenquelle bereitgestellte potentielle Gefahr als eine Schleudergefahr klassifiziert werden.

In einem Schritt 207 werden die Gefahrendaten an einen Cloudserver gesendet. Der Cloudserver kann dann die Gefahrendaten entsprechend auswerten und insbesondere die vorgenannte Klassifikation der Gefahr als eine Schleudergefahr übernehmen bzw. durchführen.

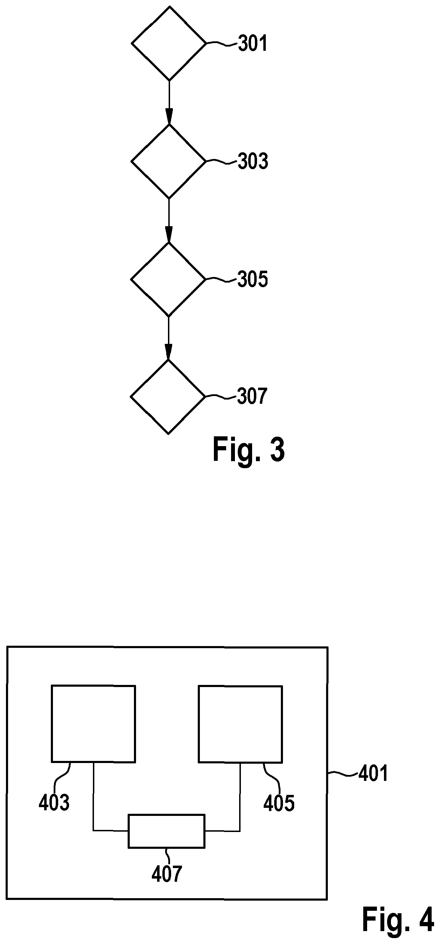

Fig. 3 zeigt ein Ablaufdiagramm eines anderen Verfahrens zum Ermitteln einer Gefahrenquelle einer Fahrstrecke.

Gemäß einem Schritt 301 messen mehrere Fahrzeuge jeweils einen Fahrzeugparameter, während ihrer jeweiligen Fahrt entlang der Fahrstrecke. Gemäß einem Schritt 303 findet ein jeweiliger Vergleich zwischen den gemessenen Fahrzeugparametern und jeweiligen Fahrzeugparameterschwellwerten statt. Abhängig von den jeweiligen Vergleichen werden in einem Schritt 305 Gefahrendaten umfassend den jeweiligen gemessenen Fahrzeugparameter und einen jeweiligen der Messung zugeordneten Fahrzeugort für eine Information darüber gebildet, dass an dem der jeweiligen Messung zugeordneten Fahrzeugort eine Gefahrenquelle gebildet ist.

Gemäß einem Schritt 307 senden die mehrere Fahrzeuge ihre jeweiligen Gefahrendaten an einen Cloudserver. Der Cloudserver kann dann in vorteilhafter Weise die empfangenen Gefahrendaten auswerten, insbesondere statistisch auswerten. Vorzugsweise kann hier eine Aggregation der empfangenen Gefahrendaten durchgeführt werden. Es kann also insbesondere in vorteilhafter Weise eine Aussage darüber getroffen werden, an welchem Ort entlang der Fahrstrecke welche Fahrzeugparameter außergewöhnliche Messwerte aufweisen. Dadurch ist in vorteilhafter Weise eine Aussage darüber ermöglicht, welche spezifische Gefahr bzw. spezifische Gefahrenquelle an dem Ort gebildet ist.

Der Cloudserver als zentrale Instanz kann insofern in vorteilhafter Weise bei der Verarbeitung der Gefahrendaten zum einen die Art des Fahrzeugparameters, also den Typ des Messwerts, und eine Zustandsinformation eines Fahrerassistenzsystems, also insbesondere einen Betriebszustand, berücksichtigen. Somit kann der Cloudserver entsprechende Warnhinweise spezifisch auf einen bestimmten Gefahrentyp bilden und insbesondere auf einer digitalen Karte eintragen.

Häufen sich beispielsweise an einem bestimmten Ort Eingriffe eines elektronischen Stabilitätsprogramm-Fahrzeugregelungssystems und/oder häufen sich hohe Werte einer Querbeschleunigung und/oder hohe Werte einer Gierrate und/oder hohe Werte einer Gierbeschleunigung, dann umfasst der Warnhinweis, die Information, dass an dem bestimmten Ort eine Schleudergefahr besteht. Hohe Werte bedeutet hierbei insbesondere, dass der entsprechende Fahrzeugparameter größer oder größer gleich als ein entsprechender Fahrzeugparameterschwellwert ist.

Häufen sich beispielsweise an einem Ort in einer Kurve Meldungen von Spurhaltungssystemen, so umfasst der Warnhinweis, dass sich an dem Ort eine gefährliche Kurve befindet. Vorzugsweise kann vorgesehen sein, dass noch ein Kurvenradius berechnet und mit dem Warnhinweis an die Fahrzeuge gesendet wird. Meldungen von Spurhaltungssystemen werden insbesondere dadurch definiert, dass hier ein Betriebszustand eines Spurhaltungssystems gemessen wurde, wobei der gemessene Betriebszustand ein aktiver Betriebszustand ist, in welchem das Spurhaltungssystem einen Eingriff in eine Fahrzeugführung durchgeführt hat.

Häufen sich beispielsweise an einem Ort entlang der Fahrstrecke automatische Notbremsungen und/oder ABS-Eingriffe und/oder hohe Werte einer Längsbeschleunigung, so umfasst ein entsprechender Warnhinweis die Information, dass an dem Ort eine erhöhte Gefahr eines Auffahrunfalls bestehen kann.

Häufen sich beispielsweise an einem Ort hohe Werte einer Vertikalbeschleunigung, so umfasst ein entsprechender Warnhinweis die Information, dass an dem Ort Fahrbahnschäden, beispielsweise ein oder mehrere Schlaglöcher, vorhanden sind.

Solche Warnhinweise können dann mittels des Cloudservers an die Fahrzeuge gesendet werden. Somit sind diese in vorteilhafter Weise in die Lage versetzt, ihre entsprechenden Fahrstabilisierungssysteme wie beispielsweise ESP (Elektronisches Stabilitätsprogramm)-Systeme oder Fahrerassistenzsysteme allgemein auf die potentielle bevorstehende Gefahr rechtzeitig vorzubereiten. Eine solche Vorbereitung kann beispielsweise eine Umparametrierung der Systeme umfassen. Das heißt also beispielsweise, dass Eingriffsschwellen abgesenkt werden, um einen früheren Eingriff einer Regelung zu ermöglichen.

In einer nicht gezeigten Ausführungsform kann vorgesehen sein, dass, wenn sich ein Fahrzeug einem Ort entlang der Fahrstrecke nähert, an welchem eine Gefahrenquelle ermittelt wurde, dann ein Warnhinweis bereitgestellt wird. Somit ist ein Fahrzeugfahrer bzw. Fahrzeugführer schnell und rechtzeitig vor der Gefahrenquelle gewarnt und kann entsprechend seine Fahrzeugführung bzw. sein Fahrverhalten anpassen. Vorzugsweise kann vorgesehen sein, dass auf einer digitalen Karte angezeigt wird, wo sich eine Gefahrenstelle befindet und um was für einen Typ für Gefahr es sich dabei handelt.

In einer weiteren nicht gezeigten Ausführungsform kann vorgesehen sein, dass basierend auf einer Auswertung des Cloudservers entsprechende Gefahrenmerkmale für eine digitale Karte gebildet werden. Solche Gefahrenmerkmale umfassen insbesondere eine Information, an welchem Ort sich welche Gefahrenquelle befindet. Solche Gefahrenmerkmale können dann insbesondere mit Navigationsinformationen verknüpft und auf einem tragbaren Speichermedium gespeichert werden und dann vorzugsweise vertrieben werden.

Vorzugsweise kann vorgesehen sein, dass ein Nutzer die Gefahrenmerkmale für seine Fahrstrecke per drahtloser Datenübertragung von dem Cloudserver oder einem anderen zentralen Server herunterlädt. Dies ermöglicht in vorteilhafter Weise eine Berücksichtigung kurzfristiger Änderungen von Gefahrensituationen, zum Beispiel aufgrund von winterlichen Straßenverhältnissen.

Dadurch, dass Gefahrendaten nur dann gebildet werden, wenn der Vergleich ein bestimmtes Ergebnis hat, können unkritische Manöver, wie beispielsweise Parkier- und Manövriervorgänge erkannt werden. Durch solche Plausibilitätsprüfungen werden diese insofern ausgeschlossen. Beispielsweise wird überprüft, ob eine Fahrzeuggeschwindigkeit größer gleich einem Fahrzeuggeschwindigkeitsschwellwert ist. Es wird also eine untere Schwelle für die Fahrzeuggeschwindigkeit definiert, oberhalb derer dann Gefahrendaten gebildet werden, falls die gemessene Fahrzeuggeschwindigkeit größer gleich dieser unteren Schwelle ist. Dies gilt insbesondere analog für weitere Fahrzeugparameter, insbesondere Längsbeschleunigung, Querbeschleunigung, Vertikalbeschleunigung (beispielsweise bei Fahrzeugen mit Fahrwerkregelung), Gierrate, Gierbeschleunigung, Lenkradwinkelgeschwindigkeit.

Fig. 4 zeigt eine Vorrichtung 401 zum Ermitteln einer Gefahrenquelle einer Fahrstrecke.

Die Vorrichtung 401 umfasst eine Messeinrichtung 403 zum Messen eines Fahrzeugparameters, eine Ortsbestimmungseinrichtung 405 zum Bestimmen eines Fahrzeugorts und eine Datenverarbeitungseinrichtung 407 zum Vergleichen des gemessenen Fahrzeugparameters mit einem Fahrzeugparameterschwellwert und zum Bilden von Gefahrendaten umfassend den gemessenen Fahrzeugparameter und einen der Messung zugeordneten Fahrzeugort für eine Information darüber, dass an dem der Messung zugeordneten Fahrzeugort eine Gefahrenquelle gebildet ist.

Vorzugsweise kann vorgesehen sein, dass die Ortbestimmungseinrichtung 405 als ein Navigationssystem gebildet ist bzw. von einem solchen umfasst ist. Die Ortbestimmungseinrichtung 405 kann beispielsweise einen GPS (Global Positioning System) - Sensor oder mehrere GPS-Sensoren umfassen.

Insbesondere kann vorgesehen sein, dass die Messeinrichtung 403 einen oder mehrere Sensoren zum Messen des Fahrzeugparameters umfasst. Die Sensoren können insbesondere gleich oder unterschiedlich gebildet sein. Beispielsweise kann der Sensor ein Intertialsensor wie beispielsweise ein Beschleunigungssensor, ein Temperatursensor, ein Spannungssensor, ein Stromsensor, oder ein Drucksensor sein.

Zusammenfassend umfasst die Erfindung insbesondere den Gedanken, insbesondere Kurvenradien und/oder Gefahrenmerkmale automatisch auf der Basis von Meldungen eines Fahrzeugs oder mehreren Fahrzeugen zu ermitteln bzw. zu erfassen. Solche Meldungen entsprechen hier insbesondere den gesendeten Fahrzeugdaten, welche die Information darüber an den Cloudserver senden, dass an einem bestimmten Ort entlang der Fahrstrecke ein Fahrerassistenzsystem bzw. ein Fahrstabilisierungssystem in eine Fahrzeugführung eingreifen musste. Insbesondere umfassen die Gefahrendaten die Information darüber, dass ein außergewöhnlich hoher Messwert, also ein Messwert größer als ein vorbestimmter Schwellwert, einer Fahrzeugbewegungsgröße aufgetreten ist. Es wird hierbei insbesondere die Art des Ereignisses, also den spezifischen Fahrzeugparameter, den Ort, an dem das Ereignis aufgetreten ist und/oder einen Kurvenradius an dem Ort, falls eine Kurve vorliegt, an den Cloudserver gesendet.

Es wird also insbesondere eine aktuelle Fahrzeugposition bzw. ein aktueller Fahrzeugort mit Zustandsinformationen der Fahrerassistenzsysteme und/oder der Fahrzeugbewegungsgrößen des Fahrzeugs miteinander vernetzt und vorzugsweise an den Cloudserver zur weiteren Auswertung gesendet.

## Patentansprüche

1. Verfahren zum Ermitteln einer Gefahrenquelle einer Fahrstrecke, wobei während einer Fahrt eines Fahrzeugs entlang der Fahrstrecke ein Fahrzeugparameter gemessen (101, 201) und mit einem Fahrzeugparameterschwellwert verglichen (103, 203) wird, wobei abhängig von dem Vergleich Gefahrendaten umfassend den gemessenen Fahrzeugparameter und einen der Messung zugeordneten Fahrzeugort für eine Information darüber gebildet werden, dass an dem der Messung zugeordneten Fahrzeugort eine Gefahrenquelle gebildet (105, 205) ist, **dadurch gekennzeichnet, dass**, wenn der Fahrzeugparameter eine Vertikalbeschleunigung ist, die Gefahrenquelle als Fahrbahnschäden, beispielsweise als ein Schlagloch, klassifiziert wird.

2. Verfahren nach Anspruch 1, wobei der Fahrzeugparameter ein Parameter ausgewählt aus der folgenden Gruppe von Parametern ist: Betriebszustand eines Fahrerassistenzsystems des Fahrzeugs, Fahrzeugbewegungsgröße, insbesondere Längsbeschleunigung, Querbeschleunigung, Vertikalbeschleunigung, Gierrate, Gierbeschleunigung, Lenkradwinkelgeschwindigkeit, Fahrzeuggeschwindigkeit, Sensorwert eines Sensors, insbesondere eines Kollisionssensors zum Erkennen einer Kollision.

3. Verfahren nach Anspruch 1 oder 2, wobei ein Umweltparameter ausgewählt aus der folgenden Gruppen von Parametern gemessen und den Gefahrendaten für eine Information darüber zugeordnet wird, welche Umweltbedingungen zum Zeitpunkt der Messung des Fahrzeugparameters vorliegen: Umgebungstemperatur des Fahrzeugs, Uhrzeit, Wetter, Scheibenwischerbetriebszustand, Umgebungshelligkeit, Umgebungsluftdruck, Umgebungsfeuchtigkeit.

4. Verfahren nach einem der vorherigen Ansprüche, wobei die Gefahrendaten an einen Cloudserver für eine weitere Verarbeitung gesendet (207, 305) werden.

5. Verfahren nach einem der vorherigen Ansprüche, wobei, wenn der Fahrzeugparameter eine Fahrzeugquerbeschleunigung und/oder eine Gierrate und/oder eine Gierbeschleunigung oder ein Betriebszustand eines Fahrdynamikregelungssystems ist, eine mittels der Gefahrenquelle bereitgestellte potentielle Gefahr als eine Schleudergefahr klassifiziert wird.

6. Verfahren nach einem der vorherigen Ansprüche, wobei, wenn der Fahrzeugparameter ein Betriebszustand eines Spurhaltungssystems ist, die Gefahrenquelle als eine Kurve klassifiziert wird.

7. Verfahren nach einem der vorherigen Ansprüche, wobei, wenn der Fahrzeugparameter eine Fahrzeuglängsbeschleunigung oder ein Betriebszustand eines automatischen Notbremssystems oder eines Antiblockiersystems ist, eine mittels der Gefahrenquelle bereitgestellte potentielle Gefahr als ein potentieller Auffahrunfall klassifiziert wird.

8. Verfahren nach einem der vorherigen Ansprüche, wobei basierend auf den Gefahrendaten ein Warnhinweis bereitgestellt wird.

9. Verfahren nach einem der vorherigen Ansprüche, wobei basierend auf den Gefahrendaten ein Fahrerassistenzsystem des Fahrzeugs zum Durchführen einer Aktion in Reaktion auf die Gefahrenquelle betrieben wird.

10. Vorrichtung (401) zum Ermitteln einer Gefahrenquelle einer Fahrstrecke, umfassend eine Messeinrichtung (403) zum Messen eines Fahrzeugparameters, eine Ortsbestimmungseinrichtung (405) zum Bestimmen eines Fahrzeugorts und eine Datenverarbeitungseinrichtung (407) zum Vergleichen des gemessenen Fahrzeugparameters mit einem Fahrzeugparameterschwellwert und zum Bilden von Gefahrendaten umfassend den gemessenen Fahrzeugparameter und einen der Messung zugeordneten Fahrzeugort für eine Information darüber, dass an dem der Messung zugeordneten Fahrzeugort eine Gefahrenquelle gebildet ist, wobei die Gefahrendaten abhängig von dem Vergleich gebildet werden, **dadurch gekennzeichnet, dass**, wenn der Fahrzeugparameter eine Vertikalbeschleunigung ist, die Gefahrenquelle als Fahrbahnschäden, beispielsweise als ein Schlagloch, klassifiziert wird.

11. Computerprogramm, umfassend Programmcode zur Ausführung des Verfahrens nach einem der Ansprüche 1 bis 9, wenn das Computerprogramm in einem Computer ausgeführt wird.

## Claims

1. Method for determining a source of danger on a travel route, wherein during travel by vehicle along the travel route a vehicle parameter is measured (101, 102) and is compared (103, 203) with a vehicle parameter threshold value, wherein danger data comprising the measured vehicle parameter and a vehicle location assigned to the measurement are formed as a function of the comparison, for information about the fact that a danger source is formed (105, 205) at the vehicle location which is assigned to the measurement, **characterized in that** if the vehicle parameter is a vertical acceleration, the danger source is classified as damage to the roadway, for example as a pothole.

2. Method according to Claim 1, wherein the vehicle parameter is a parameter selected from the following group of parameters: operating state of a driver assistance system of the vehicle, vehicle movement variable, in particular a longitudinal acceleration, lateral acceleration, vertical acceleration, yaw rate, yaw acceleration, steering wheel angle speed, vehicle speed, sensor value of a sensor, in particular of a collision sensor for detecting a collision.

3. Method according to Claim 1 or 2 wherein an environmental parameter selected from the following groups of parameters is measured and is assigned to the danger data for information about which environmental conditions are present at the time of the measurement of the vehicle parameter: temperature of the surroundings of the vehicle, time, weather, operating state of the windscreen wipers, ambient brightness, ambient air pressure, ambient moisture.

4. Method according to one of the preceding claims, wherein the danger data is transmitted (207, 305) to a cloud server for further processing.

5. Method according to one of the preceding claims, wherein if the vehicle parameter is a vehicle lateral acceleration and/or a yaw rate and/or a yaw acceleration or an operating state of a vehicle movement dynamics control system, a potential danger which is made available by means of the danger source is classified as a risk of skidding.

6. Method according to one of the preceding claims, wherein if the vehicle parameter is an operating state of a lane keeping system, the danger source is classified as a bend.

7. Method according to one of the preceding claims, wherein if the vehicle parameter is a vehicle longitudinal acceleration or an operating state of an automatic emergency braking system or of an anti-lock brake system, a potential danger which is made available by means of the danger source is classified as a potential tail-end collision.

8. Method according to one of the preceding claims, wherein a warning indication is made available on the basis of the danger data.

9. Method according to one of the preceding claims, wherein a driver assistance system of the vehicle for carrying out an action in reaction to the danger source is operated on the basis of the danger data.

10. Device (401) for determining a danger source of a travel route, comprising a measuring device (403) for measuring a vehicle parameter, a location-determining device (405) for determining a vehicle location and a data processing device (407) for comparing the measured vehicle parameter with a vehicle parameter threshold value and for forming danger data comprising the measured vehicle parameter and a vehicle location assigned to the measurement, for information about the fact that a danger source is formed at the vehicle location which is assigned to the measurement, wherein the danger data is formed as a function of the comparison, **characterized in that** if the vehicle parameter is a vertical acceleration, the danger source is classified as damage to the roadway, for example as a pothole.

11. Computer program, comprising a program code for carrying out the method according to one of Claims 1 to 9, if the computer program is executed in a computer.

## Revendications

1. Procédé de détermination d'une source de danger sur un parcours, dans lequel, pendant le déplacement d'un véhicule sur le parcours, un paramètre du véhicule est mesuré (101, 201) et comparé (103, 203) à une valeur de seuil du paramètre du véhicule, dans lequel, en fonction de la comparaison, des données de danger comportant le paramètre du véhicule mesuré et un endroit du véhicule associé à la mesure sont établies pour indiquer qu'une source de danger est apparue (105, 205) à l'endroit du véhicule associé à la mesure, **caractérisé en ce que**, lorsque le paramètre du véhicule est une accélération verticale, la source de danger est classée comme étant un endommagement de la route, par exemple comme étant un nid-de-poule.

2. Procédé selon la revendication 1, dans lequel le paramètre du véhicule est un paramètre choisi dans le groupe de paramètres suivants : état de fonctionnement d'un système d'aide à la conduite du véhicule, grandeur de déplacement du véhicule, en particulier accélération longitudinale, accélération transversale, accélération verticale, vitesse de lacet, accélération de lacet, vitesse du volant de direction, vitesse du véhicule, valeur de capteur d'un capteur, en particulier d'un capteur de collision destiné à détecter une collision.

3. Procédé selon la revendication 1 ou 2, dans lequel un paramètre d'environnement choisi parmi les groupes de paramètres suivants est mesuré et affecté aux données de danger afin d'obtenir une information concernant les conditions ambiantes au moment de la mesure du paramètre du véhicule : température ambiante du véhicule, heure, météo, conditions de fonctionnement des essuie-glaces, luminosité ambiante, pression de l'air ambiant, humidité ambiante.

4. Procédé selon l'une des revendications précédentes, dans lequel les données de danger sont envoyées à un serveur en nuage en vue d'un traitement ultérieur (207, 305) .

5. Procédé selon l'une des revendications précédentes, dans lequel, lorsque le paramètre du véhicule est une accélération transversale du véhicule et/ou une vitesse de lacet et/ou une accélération de lacet ou un état de fonctionnement d'un système de commande dynamique du véhicule, un danger potentiel fourni par la source de danger est classé comme étant un danger de dérapage.

6. Procédé selon l'une des revendications 1 ou 2, dans lequel, lorsque le paramètre du véhicule est un état de fonctionnement d'un système de suivi de voie, la source de danger est classée comme étant un virage.

7. Procédé selon l'une des revendications précédentes, dans lequel, lorsque le paramètre du véhicule est une accélération longitudinale du véhicule ou un état de fonctionnement d'un système de freinage d'urgence automatique ou d'un système de freinage antiblocage, un danger potentiel fourni par la source de danger est classé comme étant une collision potentielle par l'arrière.

8. Procédé selon l'une des revendications précédentes, dans lequel un avertissement basé sur les données de danger est fourni.

9. Procédé selon l'une des revendications précédentes, dans lequel un système d'aide à la conduite d'un véhicule est mis en fonctionnement sur la base des données de danger pour effectuer une action en réponse à la source de danger.

10. Dispositif (401) de détermination d'une source de danger sur un parcours, comprenant un dispositif de mesure (403) destiné à mesurer un paramètre du véhicule, un moyen de détermination d'endroit (405) destiné à déterminer un endroit du véhicule et un moyen de traitement de données (407) destiné à comparer le paramètre du véhicule mesuré à une valeur de seuil de paramètre du véhicule et à établir des données de danger comprenant le paramètre du véhicule mesuré et un endroit du véhicule associé à la mesure afin d'obtenir une information indiquant qu'une source de danger est formée à l'endroit du véhicule associé à la mesure, dans lequel les données de danger sont établies en fonction de la comparaison, **caractérisé en ce que**, lorsque le paramètre du véhicule est une accélération verticale, la source de danger est classée comme étant un endommagement de la route, par exemple comme étant un nid-de-poule.

11. Programme d'ordinateur comprenant un code de programme destiné à mettre en oeuvre le procédé selon l'une des revendications 1 à 9 lorsque le programme d'ordinateur est exécuté sur un ordinateur.
